# EUROPÄISCHE PATENTSCHRIFT

(11) **EP 2 918 727 B1**
(45) Veröffentlichungstag und Bekanntmachung des Hinweises auf die Patenterteilung: **06.06.2018**
(21) Anmeldenummer: 15151952.7
(22) Anmeldetag: 21.01.2015
(51) Int. Cl.: E02B 8/08, E02B 9/00

(54) **Baukörper, insbesondere aus Fertigteilen, für ein Kleinkraftwerk**
Component, in particular one made of prefabricated parts, for a small-scale power station
Corps de construction, en particulier à partir d'éléments préfabriqués, pour une petite centrale

(30) Priorität: 11.03.2014 AT 5003714 U
(43) Veröffentlichungstag der Anmeldung: 16.09.2015
(73) Patentinhaber: Franz Seidl & Sohn GesmbH, 3970 Altweitra (AT)
(72) Erfinder: Preiss, Reinhard, 3970 Altweitra (AT); Seidl, David, 3970 Altweitra (AT)
(74) Vertreter: Müllner, Martin

(56) Entgegenhaltungen:
- WO-A2-2011/051421
- CH-A2- 705 893
- DE-A1-102009 007 028
- US-A1- 2012 235 416

## Beschreibung

### Technisches Gebiet

Die Erfindung betrifft einen Baukörper, insbesondere aus Fertigteilen, für ein Kleinkraftwerk in einem Gewässer, mit einer Einströmkammer, einer Turbinen- und Ausströmkammer und einer parallelen Fischleiteinrichtung.

### Stand der Technik

Zur Nutzung der Wasserkraft auch bei Wasserläufen mit vergleichsweise geringen Wassermengen werden zunehmend Kleinkraftwerke eingesetzt. Diese versorgen im Inselbetrieb einzelne Verbraucher in der unmittelbaren Umgebung, können jedoch auch in das öffentliche Stromnetz einspeisen. Stets wird eine Fallhöhe zwischen Oberwasser und Unterwasser ausgenützt, also ein Niveauunterschied, der schon im Verlauf eines Baches etwa bei einer Stufe im Bachbett existiert oder auf einfache Weise geschaffen werden kann. An dieser Stelle lässt man das Wasser von einer Einströmkammer ausgehend über eine Turbine laufen, die sich in einer Turbinen- bzw. Ausströmkammer befindet. Die Turbine ist an einen Generator angeschlossen. In diesem Sinn sind Schachtkraftwerke bekannt, die in ein Gewässer im Bereich einer Stufe bzw. einer Aufstauung in ein Bachbett eingesetzt werden. Der Schacht wird von einer Einströmkammer ausgehend vertikal bzw. schräg durchflossen und treibt dabei eine Turbine (z.B. eine Francisturbine) an, die die Fallhöhe zwischen Oberwasser und Unterwasser abarbeitet. Eine Ausströmkammer führt das Wasser dann wieder dem natürlichen Verlauf des Baches zu. Die Auswirkungen auf die Ökologie sind zweifellos durch Kleinkraftwerke geringer, als bei Großkraftwerken, die umfangreiche Eingriffe in die Natur bedingen. Dennoch sind auch bei Kleinkraftwerken ökologische Begleitmaßnahmen erforderlich, wie etwa Fischaufstiege. So wurden parallel zu einem Wehr bzw. zu einer Staustufe Fischtreppen aufgebaut, die manchmal über verschlungene Wege einen Niveauunterschied entsprechend der Fallhöhe überwunden. Auch bei Kleinkraftwerken sind Maßnahmen erforderlich, Fische von der Turbine fern zu halten. Dies ist mit dem entsprechenden Aufwand durch parallele Fischleiteinrichtungen möglich oder auch durch elektromechanische Aufstiegshilfen, wie etwa einen Fischlift.

CH 705 893 A2 offenbart ein Baukörper für ein Kleinkraftwerk mit den Merkmale des Oberbegriffs des Anspruchs 1.

### Darstellung der Erfindung

Die Erfindung zielt darauf ab, einen vorgefertigten Baukörper zu schaffen, der einfach in ein fließendes Gewässer zur Bildung einer Niveaustufe eingesetzt werden kann und die Voraussetzungen für einen effizienten Betrieb einer Turbine sowie für einen gezielten Fischaufstieg schafft. Dies wird dadurch erreicht, dass die Einströmkammer als Einlaufbecken im Öffnungsbereich eines zur Wasserführung vorgesehenen Schachtes ausgebildet ist und einen Teil der Schachtöffnung ausfüllt, dass eine Fischdurchtrittsöffnung im Boden des Einlaufbeckens vorgesehen ist, die nach unten in den Schacht einmündet und dass in einer Trennwand des Schachtes zur Turbinen- und Ausströmkammer hin eine weitere Durchtrittsöffnung unter Wasser für Fische vorgesehen ist. Auf Grund der Strömung durch die etwa schlitzartige Fischdurchtrittsöffnung im Boden des Einlaufbeckens gelangen die stromaufwärts orientierten, jedoch langsam stromabwärts treibenden Fische in den Schachtraum unterhalb des Einlaufbeckens und durch eine weitere Öffnung dann schon in den Unterwasserbereich und weiter in den freien Verlauf des Gewässers. Weiterhin, sind zur Fischdurchtrittsöffnung in Strömungsrichtung hinführende Leiteinrichtungen wie Leitflächen oder Rippen im Boden des Einlaufbeckens vorgesehen. Dadurch findet man mit einem geringen Querschnitt der Durchtrittsöffnung das Auslangen. Es tritt ein Trichtereffekt mit wenig Verlustwasser für die Turbine ein. Es ist darauf zu achten, dass die Turbine maximal gespeist wird und über den Bypass für den Fischaufstieg zwar ausreichend aber möglichst wenig Wasser an der Turbine vorbeiläuft. Für die Effizienz des Fischaufstieges ist die Fischdurchtrittsöffnung als in Strömungsrichtung schräggestellter Stutzen im Boden des Einlaufbeckens ausgebildet. Die Durchtrittsöffnung ist somit nicht bloß eine aus einem Fertigbetonkörper am Boden ausgesparte Öffnung. Die Öffnung ist schräg orientiert und entspricht im Längsschnitt einem Parallelogramm, dessen spitze Winkel in Strömungsrichtung weisen. Diese Form sowie auch die vorgenannten Leitflächen bzw. Rippen können als Einsatz z.B. aus Edelstahl oder aus Kunststoff ausgebildet und in die Öffnung eingesetzt sowie mit den flanschartig anschließenden Bodenbereichen im Einlaufbecken fixiert sein. Eine besonders praxisgerechte Ausführung sieht vor, dass die Fischdurchtrittsöffnung im Einlaufbecken zwischen einer Beckeneinlauföffnung und einem Turbineneinlauf vor einem Rechen angeordnet ist. Der Rechen verhindert nicht nur den Durchtritt von Schwemmgut. Er fördert weiters die Tendenz, die Fische durch die vorgelagerte Bodenöffnung zu schleusen. Dabei können auch Sand oder andere Feststoffe durch diese Öffnung gelangen. In weiterer Folge ist es von Vorteil, wenn der Schacht neben dem Einlaufbecken oben offen und als Lichtschacht zur Orientierungshilfe der Fische im Schacht ausgebildet ist. Einerseits übt der Lichteinfall einen Leiteffekt auf das Verhalten der Fische in die gewünschte Richtung aus, andererseits bietet die Öffnung nach oben auch die Möglichkeit der Absaugung oder Entleerung des Schachtes unterhalb des Einlaufbeckens von Sand, Steinen oder anderem Schwemmgut. Erwähnt sei, dass die Durchtrittsöffnung im Schacht zum Unterwasser hin, durch welche die Fische hinaus in Richtung zum freien Bachbett gelangen, allenfalls durch Klappen oder dergleichen, eventuell zeitgesteuert, geschlossen bzw. bei Annäherung eines Fisches geöffnet werden können. Dadurch kann der Wasserverlust für die Turbine durch den Bypass gering und der Wirkungsgrad der Turbine hoch gehalten werden.

### Kurze Beschreibung der Abbildungen der Zeichnungen

Ein Ausführungsbeispiel des Erfindungsgegenstandes ist in den Zeichnungen dargestellt.
Fig. 1 zeigt einen Schrägriss des Baukörpers bei entfernter Seitenwand und
Fig. 2 einen Längsschnitt in Schrägansicht mit einer Schnittebene durch das Einlaufbecken.

### Weg(e) zur Ausführung der Erfindung

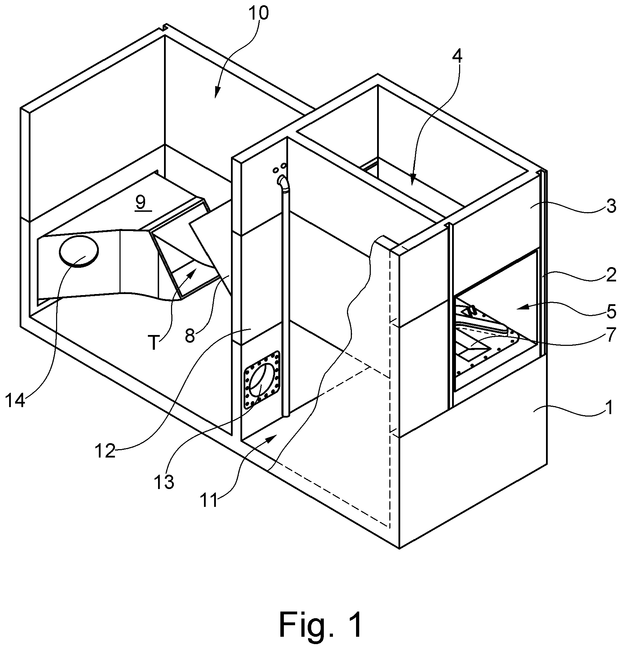

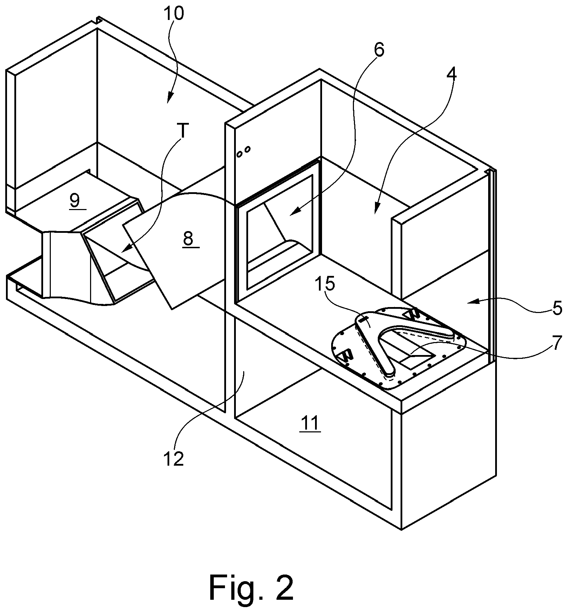

Gemäß Fig. 1 besteht der Baukörper aus mehreren übereinander liegenden Fertigteilen 1, 2, 3, die beispielsweise in ein Bett eines Gerinnes eingesetzt werden. Im Wesentlichen handelt es sich um einen Schacht, der mehrere Kammern aufweist, die durchströmt werden oder Wasser führen. Eine Einströmkammer ist als oben offenes Einlaufbecken 4 mit seitlicher Einströmöffnung 5 ausgebildet. Dieses Einlaufbecken 4 hat der Einströmöffnung 5 gegenüberliegend eine Turbineneinlauföffnung 6 (Fig. 2). Im Boden des Einlaufbeckens 4 ist eine Fischdurchtrittsöffnung 7 als schräg gerichteter Kanal oder Stutzen vorgesehen. Zwischen der Fischdurchtrittsöffnung 7 und der Turbineneinlauföffnung 6 kann ein Rechen vorgesehen sein (nicht dargestellt), der Treibgut von der nachfolgenden Turbine T fernhält. Die Turbine T ist ebenfalls nicht dargestellt, wohl aber ein Anströmschacht 8 und ein Abströmschacht 9 vor und nach der Turbine T. Die Turbine T und An- und Abströmschacht 8 und 9 sind in einer Turbinen- und Ausströmkammer 10 angeordnet.

Wie die Fig. 1 und 2 zeigen, mündet die Fischdurchtrittsöffnung 7 in den unteren Bereich eines Schachtes 11, der hier L-förmig ausgebildet ist und neben dem Einlaufbecken 4 nach oben zur Belichtung offen ist. Der Schacht 11 ist von der Turbinen- und Ausströmkammer 10 durch eine Trennwand 12 abgeteilt. In Fig. 1 ist eine weitere Durchtrittsöffnung 13 ersichtlich. Eine ähnliche Öffnung 14 befindet sich auch im Abströmschacht 9.

Zur Fischdurchtrittsöffnung 7 führen Leiteinrichtungen 15 wie Rippen oder Leitflächen hin, wodurch Fische infolge der Grundströmung und durch die Einbauten einschließlich der Schrägstellung der genannten Öffnung 7 zumeist mit dem Schwanz voraus in den unteren Bereich des Schachtes 11 gelangen. Die Leiteinrichtungen 15 sowie die schräge Durchtrittsöffnung 7 können einstückig als Bauteil beispielsweise aus Edelstahl gefertigt sein. Dieser Bauteil wird in eine Ausnehmung im Boden des Einlaufbeckens 4 eingesetzt und beispielsweise mit einem Gegenrahmen verschraubt. Im unteren Bereich des Schachtes 11 werden die Fische durch das von oben frei eintretende Licht (Tageslicht, allenfalls Kunstlicht) zur Durchtrittsöffnung 13 geführt. Diese kann ständig durchflossen oder durch eine oder mehrere Klappen temporär verschlossen sein. Sensoren können die Öffnung der Klappen einleiten, sobald diese einen Fisch im belichteten Teil des Schachtes 11 feststellen.

Es kann auch eine Zeitsteuerung vorgesehen sein. Diese oder ähnliche Maßnahmen dienen dazu, die an der Turbine T vorbeiströmende Wassermenge gering zu halten. Wenn das Gerinne allerdings ausreichend Wasser führt, dann sind keine besonderen Maßnahmen zur Reduzierung der Verlustwassermenge erforderlich.

Die Fische gelangen sodann in die Turbinen- und Ausströmkammer 10, die wieder zumindest teilweise nach oben offen ist und einen Lichteinfall ermöglicht. Durch die Öffnung 14 führt der Weg der Fische dann weiter in das nachfolgende natürliche Bachbett.

Genau in umgekehrter Richtung steigen die Fische gegen die Strömungsrichtung auf, wobei die Anordnungen so getroffen sind, dass die Fische durch die dafür vorgesehenen Bereiche geleitet werden.

## Patentansprüche

1. Baukörper, insbesondere aus Fertigteilen, für ein Kleinkraftwerk in einem Gewässer, mit einer Einströmkammer, einer Turbinen- und Ausströmkammer und einem zur Wasserführung vorgesehenen Schacht (11) als Fischleiteinrichtung parallel zur Einströmkammer und der Turbinen- und Ausströmkammer sowie mit Fischdurchtrittsöffnung (7, 13) in den Schacht (11) hinein und von diesem zur Turbinen- und Ausströmkammer (10) hinaus, **dadurch gekennzeichnet, dass** die in den Schacht (11) einmündende Fischdurchtrittsöffnung (7) im Boden der als Einlaufbecken (4) ausgebildeten Einströmkammer vorgesehen ist und einen in Strömungsrichtung schräggestellten Stutzen zum Schacht (11) hin aufweist,
wobei im Boden des Einlaufbeckens (4) in Strömungsrichtung zur Fischdurchtrittsöffnung (7) hinführende Leiteinrichtungen (15), wie Leitflächen oder Rippen angeordnet sind.

2. Baukörper nach Anspruch 1, **dadurch gekennzeichnet, dass** die Fischdurchtrittsöffnung (7) im Einlaufbecken (4) zwischen einer Beckeneinlauföffnung (5) und einem Turbineneinlauf (6) vor einem Rechen angeordnet ist.

3. Baukörper nach Anspruch 1 oder 2, **dadurch gekennzeichnet, dass** der Schacht (11) neben dem Einlaufbecken (4) oben offen und als Lichtschacht zur Orientierungshilfe der Fische im Schacht ausgebildet ist.

## Claims

1. Construction body, in particular of prefabricated parts, for a small power station in a watercourse having an inflow chamber, a turbine and outflow chamber, and a shaft (11) provided for conducting water as a fish guiding device in parallel to the inflow chamber and to the turbine and outflow chamber as well as having fish passing openings (7, 13) into the shaft (11) and from there out to the turbine and outflow chamber (10),
**characterized in that**
the fish passing opening (7) debouching into the shaft (11) is provided in the bottom of the inflow chamber formed as inlet basin (4), and includes a connecting piece inclined in flow direction to the shaft (11), wherein there are arranged in the bottom of the inlet basin (4) guiding devices (15) such as guiding surfaces or ribs leading in flow direction toward the fish passing opening (7).

2. Construction body according to claim 1, **characterized in that** the fish passing opening (7) in the inlet basin (4) is arranged between a basin inlet opening (5) and a turbine inlet (6) in front of a rake.

3. Construction body according to claim 1 or 2, **characterized in that** the shaft (11) next to the inlet basin (4) is open at the top and formed as a light shaft for the guidance of the fishes in the shaft.

## Revendications

1. Structure, notamment constituée de pièces préfabriquées, qui est destinée à une petite centrale hydroélectrique et qui est pourvue d'une chambre d'entrée du flux, d'une chambre à turbine par laquelle sort le flux et d'un conduit (11) destiné à être traversé par l'eau, servant ainsi de dispositif de guidage des poissons et étant agencée en parallèle à la chambre d'entrée du flux et à la chambre à turbine par laquelle sort le flux et présentant d'orifices de passage de poissons (7, 13) leur permettant d'entrer dans le conduit (11) et d'en sortir pour atteindre la chambre à turbine par laquelle sort le flux (10), **caractérisée en ce que** l'orifice de passage de poissons (7) débouchant dans le conduit (11) est disposé dans le fond de la chambre d'entrée du flux réalisée sous forme d'un bassin d'entrée (4) tout en étant pourvu d'un embout qui mène dans le conduit (11) et qui est incliné selon le sens du flux, des dispositifs de guidage (15) tels que des surfaces de guidage ou des nervures étant disposés au fond du bassin d'entrée (4) de manière à assurer un guidage, selon le sens du flux, vers l'orifice de passage de poissons (7).

2. Structure selon la revendication 1, **caractérisée en ce qu'**au sein du bassin d'entrée (4), l'orifice de passage de poissons (7) est disposé entre un orifice d'entrée de bassin (5) et une entrée de turbine, en amont d'une grille.

3. Structure selon les revendications 1 ou 2, **caractérisée en ce que** le conduit (11) est réalisé de manière à ce qu'il se trouve à côté du bassin d'entrée (4) et soit ouvert vers le haut, servant ainsi de puits de lumière facilitant l'orientation des poissons dans le conduit.
